Europäisches Patentamt

European Patent Office

Office européen des brevets

(19)

(11) Veröffentlichungsnummer : **0 374 236 B1**

(12) **EUROPÄISCHE PATENTSCHRIFT**

(45) Veröffentlichungstag der Patentschrift :
**15.04.92 Patentblatt 92/16**

(51) Int. Cl.$^5$ : **B65G 21/22**

(21) Anmeldenummer : **89906763.1**

(22) Anmeldetag : **09.06.89**

(86) Internationale Anmeldenummer :
**PCT/EP89/00647**

(87) Internationale Veröffentlichungsnummer :
**WO 89/12595 28.12.89 Gazette 89/30**

---

(54) **FLEXIBLE FÜHRUNGSSCHIENE UND VERFAHREN ZUR DEREN HERSTELLUNG.**

---

(30) Priorität : **13.06.88 DE 3820055**

(43) Veröffentlichungstag der Anmeldung :
**27.06.90 Patentblatt 90/26**

(45) Bekanntmachung des Hinweises auf die
Patenterteilung :
**15.04.92 Patentblatt 92/16**

(84) Benannte Vertragsstaaten :
**AT BE CH DE FR GB IT LI LU NL SE**

(56) Entgegenhaltungen :
**DE-A- 1 804 616**
**DE-A- 2 359 972**
**GB-A- 1 551 011**

(73) Patentinhaber : **Richter, Hans**
**Ortlerstrasse 77**
**W-8900 Augsburg (DE)**

(72) Erfinder : **Richter, Hans**
**Ortlerstrasse 77**
**W-8900 Augsburg (DE)**

(74) Vertreter : **Charrier, Rolf, Dipl.-Ing.**
**Postfach 260 Rehlingenstrasse 8**
**W-8900 Augsburg 31 (DE)**

---

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Führungsschienen für Personen-und Materialtransportanlagen, wie sie z.B. bei Treppenschrägaufzügen, Seil- und Schleppliften, Materialhängebahnen zum Tragen oder Führen von Wagen, Schlitten oder einzelnen Rollen Verwendung finden.

Führungsschienen der obengenannten Art, wie sie beispielsweise der DE-PS 32 14 044 entnehmbar sind, weisen dem Verwendungszweck entsprechend profiliert mit Gleit-oder Rollbahnen für den zu führenden Wagen oder Schlitten, Nuten für Zugketten-Seile oder Schleifring-Stromabnehmerbahnen auf.

Neben geraden werden häufig räumlich gekrümmte Führungsschienen benötigt, um den Platzverhältnissen am Einbauort optimal gerecht werden zu können.

Eine derart räumlich gekrümmte Führungsschiene wird in der DE-AS 10 99 936 beschrieben, daß die Laufschiene der einschienigen Fahrbahn Abschnitte aus einem elastischen Werkstoff, wie Gummi oder dgl. aufweist, die eine für die Aufnahme des Laufrollendruckes genügende Härte und eine die Abbiegung der Fahrbahn aus der Geraden erlaubte Biegsamkeit besitzen und an in Abständen voneinander angeordneten Stützen befestigt sind.

Räumlich gekrümmte Führungsschienen wurden bisher entweder durch Berechnungen im Voraus in ihren Längen und Krümmungen theoretisch konstruiert, oder durch Aufmaß und Modellnahme auf der Baustelle den örtlichen Verhältnissen entsprechend festgelegt und dann in der Werkstatt angefertigt und dann erst auf der Baustelle montiert. Dabei müssen Krümmungen immer aus Kosten- und Fertigungsgründen auf einfache geometrische Grundformen wie Kreisbögen und Geraden zurückgeführt werden. Dies führt zwangsläufig zu nichtgewollten Abweichungen von der Idealform.

Die Führungsschiene wird bisher wegen ihren hohen Kosten nur für teuere Spezialanwendungen verwendet. Sie eignet sich nicht für kostengünstige Massenanwendungen.

Es besteht die Aufgabe Führungsschienen so auszubilden, daß sie ohne konstruktive Vorausberechnungen und spezielle Maßanfertigungen auf der Baustelle den räumlichen Verhältnissen entsprechend geformt und sofort montiert werden können, wobei preisgünstiges Stangenoder Rollenausgangsmaterial Verwendung finden soll.

Gelöst wird die Aufgabe mit den Merkmalen des Anspruches 1. Vorteilhafte Ausgestaltungen sind den Unteransprüchen entnehmbar. Es zeigen:

Fig. 1 eine räumliche Darstellung einer beispielhaften zweidimensional gekrümmten Führungsschiene mit aufgesetztem Rollenwagen.

Fig. 2 einen Querschnitt durch eine beispielhafte Führungsschiene.

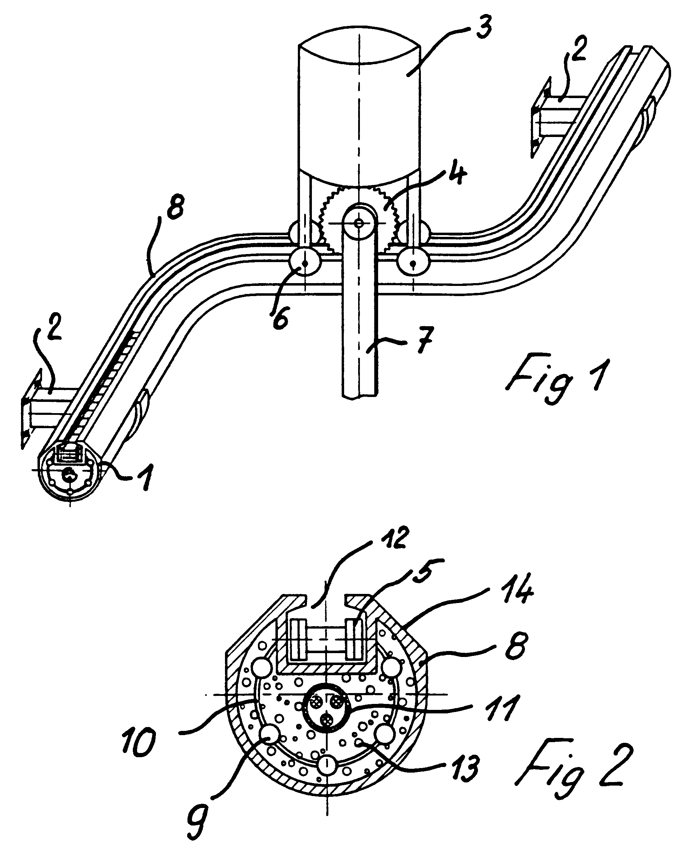

Bei der Ausführungsform nach Fig. 1 sitzt der Rollenwagen 3 auf der Führungsschiene 1. Der Rollenwagen 3 besitzt einen nicht gezeichneten Motor mit einem Kettenzahnrad 4, welches in die Seitenbogenrollenkette 5 eingreift. Der Rollenwagen 3 besitzt vier Rollen 6, die sich auf der Führungsschiene 1 abstützen und abrollen. An dem Rollenwagen 3 befindet sich der Lastaufnahmebügel 7, der nichtgezeichnet einen Sitz für Personentransport oder eine Vorrichtung für Lasten trägt.

Die Führungsschiene 1 besteht nach Fig. 2 aus einem Kunststoffmantelrohr 8, das schlauchartig hohl ausgebildet ist. In dem Kunststoffmantelrohr 8 befinden sich Stahldrähte 9, die durch Abstandshalter 10 auf Abstand und Position gehalten werden. Weiterhin befindet sich im Kunststoffmantelrohr 8 eine elektrische Leitung 11 und in einer gesonderten T-Nut 12 eingebettet eine Seitenbogenrollenkette 5, in die das Kettenzahnrad 4 eingreift. Die verbleibenden Hohlräume 13 im Kunststoffmantelrohr 8 sind mit Zement oder ähnlichem Material ausgegossen.

Die Führungsschiene 1 ist bei Fig. 1 durch die Halterungen 2 entsprechend den räumlichen Verhältnissen und Wünschen fixiert. Die Halterungen 2 sind an nichtgezeichneten Wänden oder anderen Stützkonstruktionen befestigt.

Bei der Montage der Führungsschiene 1 wird das flexible Kunststoffmantelrohr 8, das noch nicht mit Zement gefüllt ist und nur die Stahldrähte 9, die Abstandshalter 10, die elektrische Leitung 11 und die Seitenbogenrollenkette 5 beinhaltet, den räumlichen Verhältnissen und Wünschen entsprechend an Ort und Stelle montiert, in dem es durch die Halterungen 2 bei entsprechenden Abständen wunschgemäß gekrümmt und durch Befestigen der Halterungen an den entsprechenden Stützkonstruktionen wie Wänden ect. fixiert wird.

Das Kunststoffmantelrohr 8 ist ohne Zementfüllung noch so flexibel, daß es sich leicht biegen läßt aber auch so steif, daß es die gewünschten Krümmungen knicklos und geschmeidig nachvollziehen kann. Ist dieser Vorgang beendet, so wird das Kunststoffmantelrohr 8 mit flüssigem Zement oder ähnlichem verfüllt. Die Verfüllung erfolgt entweder durch Einpressen oder Eingießen, sofern ein geodätischer Höhenunterschied ausreichender Größe vorhanden ist.

Nach Aushärtung der eingepreßten Zementmasse bekommt die Führungsschiene ihre Festigkeit und Steifheit. Die eingelagerten Stahldrähte 9 übernehmen die erforderlichen Zugkräfte, der Zement die Druckkräfte.

2

Das Kunststoffmantelrohr übernimmt die Schalungsfunktion für den Stahlbetonkern und stellt die Gleit- oder Rollenbahn 14 dar.

Bei der Montage kann aber auch so vorgegangen werden, daß erst das leere Kunststoffmantelrohr verlegt und anschließend vor Einbringen des Zementes die Stahldrähte 9, die elektrische Leitung 11 und die Seitenbogenkette 5 eingeschoben werden.

Es ist auch vorgesehen, daß das Kunststoffmantelrohr 8 andere Nuten als die T-Nut 12 trägt z.B. für Schleifleitungen zur Stromübertragung, für Zugseile oder zur Kabelablage bei Stromzuführung mittels Kabeltrommel.

Es besteht auch die Möglichkeit, diese flexible Führungsbahn als statisches oder künstlerisches Element zu gestalten und zu verwenden dort wo Stangenmaterial während der Montage an Ort und Stelle zwei- oder dreidimensional gekrümmt erforderlich ist.

## Patentansprüche

1. Verfahren zur Herstellung von mehrdimensional gekrümmten Führungsschienen (1) rohrförmiger Querschnitte für Personen- und Materialtransportanlagen, **dadurch gekennzeichnet**, daß die Führungsschiene (1) ein schlauchartiges Kunststoffrohr (8) beliebigen Querschnittes ist, das den Erfordernissen entsprechend gekrümmt und anschließend zur Stabilisierung der Form mit einem aushärtenden Vergußmittel ausgegossen wird.

2. Verfahren nach Anspruch 1, **dadurch gekennzeichnet**, daß vor dem Einbringen des Vergußmittels Bewehrungsdrähte (9) in das schlauchartige Kunststoffrohr (8) eingebracht werden.

3. Verfahren nach Anspruch 1 oder 2, **dadurch gekennzeichnet** daß das schlauchartige Kunststoffrohr (8) vor dem Einfüllen des Vergußmittels partiell mit Halterungen (2) versehen wird, die, an einer Tragkonstruktion befestigt, dem schlauchartigen Kunststoffrohr (8) die gewünschte Krümmung geben.

4. Mehrdimensional gekrümmte Führungsschiene für Personen- und Materialtransportanlagen, **dadurch gekennzeichnet**, daß sie ein schlauchartiges Kunststoffrohr (8) beliebigen Querschnitts aufweist, das den Erfordernissen entsprechend gekrümmt und anschließend mit einem Vergußmittel ausgegossen ist.

5. Vorrichtung nach Anspruch 4, **dadurch gekennzeichnet**, daß sich in dem schlauchartigen Kunststoffrohr (8) zur Erhöhung der Biegesteifigkeit Bewehrungsdrähte (9) befinden.

6. Vorrichtung nach Anspruch 4 oder 5, **dadurch gekennzeichnet**, daß im schlauchartigen Kunststoffrohr (8 ) elektrische Leitungen (11) angeordnet sind.

7. Vorrichtung nach einem der Ansprüche 4 bis 6, **dadurch gekennzeichnet**, daß das schlauchartige Kunststoffrohr (8) T- Nuten (12) zur Aufnahme von Ketten (5) und/oder Schleifschienen zur Stromübertragung besitzt.

8. Vorrichtung nach einem der Ansprüche 4 bis 7, **dadurch gekennzeichnet**, daß der Umfang des schlauchartigen Kunststoffrohres (8) Abflachungen (14) oder ähnliches zum Abrollen von Rollen (6) oder Gleiten von Schlitten besitzt.

9. Vorrichtung nach einem der Ansprüche 4 bis 8, **dadurch gekennzeichnet**, daß das schlauchartige Kunststoffrohr (8) in Längsrichtung mehr als einen Hohlraum besitzt.

## Claims

1. A process for the production of multidimensionally curved guide rails (1) of tubular cross-section for passenger and materials conveyors, characterised in that the guide rail (1) is a flexible synthetic resin tube (8) of arbitrary cross-section which is curved according to the requirements and is then lined with a hardening sealing compound in order to stabilise the shape.

2. A process as claimed in Claim 1, characterised in that, prior to the introduction of the sealing compound, reinforcing wires (9) are introduced into the flexible synthetic resin tube (8).

3. A process as claimed in Claim 1 or 2, characterised in that prior to the introduction of the sealing compound, the flexible synthetic resin tube (8) is provided in part with retainers (2) which, attached to a carrier structure, impart the desired curvature to the flexible synthetic resin tube (8).

4. A multidimensionally curved guide rail for passenger and materials conveyors, characterised in that it comprises a flexible synthetic resin tube (8) of arbitrary cross-section which is curved in accordance with the requirements and is then lined with a sealing compound.

5. A device as claimed in Claim 4, characterised in that reinforcing wires (9) are arranged in the flexible synthetic resin tube (8) in order to increase the bending resistance.

6. A device as claimed in Claim 4 or 5, characterised in that electric conductors (11) are arranged in the flexible synthetic resin tube (8).

7. A device as claimed in one of Claims 4 to 6, characterised in that the flexible synthetic resin tube (8) comprises T-grooves (12) for the accommodation of chains (5) and/or sliding contacts for power transmission.

8. A device as claimed in one of Claims 4 to 7, characterised in that the periphery of the flexible synthetic resin tube (8) comprises flattened portions (14) or the like for the rolling of rollers (6) or the sliding of slides.

9. A device as claimed in one of Claims 4 to 8, characterised in that the flexible synthetic resin tube (8) comprises more than one cavity in the longitudinal direction.


**Revendications**

1. Procédé pour la fabrication de rails de guidage (1) courbés selon plusieurs dimensions et à sections tranversales en forme de tubes pour des installations de transport des personnes et des matériaux, caractérisé par le fait que le rail de guidage (1) est un tube en matière plastique (8) analogue à un tuyau, de section transversale quelconque, que l'on courbe en fonction des exigences et dans lequel on coule ensuite un agent de scellement pouvant durcir afin de rendre sa forme rigide.

2. Procédé selon la revendication 1, caractérisé par le fait que l'on pose des fils d'armature (9) dans le tube en matière plastique (8) analogue à un tuyau avant l'introduction de l'agent de scellement.

3. Procédé selon la revendication 1 ou 2, caractérisé par le fait qu'avant le remplissage au moyen de l'agent de scellement, on munit partiellement le tube en matière plastique (8) analogue à un tuyau de supports (2) qui donnent la courbure voulue au tube en matière plastique (8) analogue à un tuyau en étant fixés à une construction porteuse.

4. Rail de guidage courbé selon plusieurs dimensions pour des installations de transport des personnes et des matériaux, caractérisé par le fait qu'il comporte un tube en matière plastique (8) analogue à un tuyau de section transversale quelconque qui est courbé en fonction des exigences et dans lequel a été ensuite coulé un agent de scellement pouvant durcir.

5. Dispositif selon la revendication 4, caractérisé par le fait que des fils d'armature (9) se trouvent dans le tube en matière plastique (8) analogue à un tuyau pour augmenter la rigidité à la flexion.

6. Dispositif selon la revendication 4 ou 5, caractérisé par le fait que des conducteurs electriques (11) sont disposés dans le tube en matière plastique (8) analogue à un tuyau.

7. Dispositif selon l'une des revendications 4 à 6, caractérisé par le fait que le tube en matière plastique (8) analogue à un tuyau comporte des rainures en T (12) destinées à recevoir des chaînes (5) et/ou des rails de contact destinés à la transmission du courant.

8. Dispositif selon l'une des revendications 4 à 7, caractérisé par le fait que la périphérie du tube en matière plastique (8) analogue à un tuyau comporte des aplatissements (14) ou similaires pour le roulement de galets (6) ou le glissement de patins.

9. Dispositif selon l'une des revendications 4 à 8, caractérisé par le fait que le tube en matière plastique (8) analogue à un tuyau comporte plus d'une cavité dans la direction longitudinale.

Fig 1

Fig 2